# EUROPÄISCHE PATENTSCHRIFT

(11) **EP 1 189 737 B1**
(45) Veröffentlichungstag und Bekanntmachung des Hinweises auf die Patenterteilung: **25.05.2005**
(21) Anmeldenummer: 00925200.8
(22) Anmeldetag: 11.04.2000
(51) Int. Cl.: B29B 17/00, B32B 27/40, B32B 27/12, B32B 27/00, B32B 5/22, B32B 5/24, B32B 5/28, B32B 5/30

(54) **VERFAHREN ZUM HERSTELLEN EINER PLATTE SOWIE NACH DIESEM VERFAHREN HERGESTELLTE PLATTE**
METHOD FOR PRODUCING A PLATE AND A PLATE PRODUCED ACCORDING TO SAID METHOD
PROCEDE DE REALISATION D'UNE PLAQUE ET PLAQUE FABRIQUEE SELON CE PROCEDE

(30) Priorität: 12.05.1999 DE 19921989
(43) Veröffentlichungstag der Anmeldung: 27.03.2002
(73) Patentinhaber: Schmid Baukunststoffe GmbH, 73333 Gingen/Fils (DE)
(72) Erfinder: SCHMID, Oliver, D-73333 Gingen/Fils (DE)
(74) Vertreter: Konle, Tilmar, Dipl.-Ing.
(86) Internationale Anmeldenummer: PCT/EP2000/003226
(87) Internationale Veröffentlichungsnummer: WO 2000/069609

(56) Entgegenhaltungen:
- EP-A- 0 245 544
- EP-A- 0 473 990
- WO-A-96/22413
- DE-A- 4 236 909
- US-A- 5 665 295

## Beschreibung

Die Erfindung bezieht sich auf ein Verfahren zum Herstellen einer Platte sowie auf eine nach diesem Verfahren hergestellte Platte. Ein derartiges Verfahren und eine derartige Platte sind aus der EP-A-245544 bekannt.

Zur Herstellung der bekannten Platte nach der EP-A-245544 wird pulverförmiges Polyurethan aus zerkleinertem Polyurethan-Hartschaum mit einem Bindemittel vermischt und als Schüttgut auf ein Förderband aufgegeben, wo mit Hilfe eines zweiten Bandes eine Verpressung der Mischung unter erhöhter Temperatur erfolgt. Zusätzlich kann aufdas Förderband eine nicht-gewobene Stoffbahn aufgebracht werden, welche sich mit der Oberfläche der Platte beim Heiß-Preßvorgang verbindet und neben einem verbesserten Aussehen die Festigkeit der Platte erhöht sowie deren Reibwert verringert.

Aus der EP-A-473990 ist es bereits bekannt, bei einer Platte aus Recycling-Kunststoffen eine schwach gewölbte Oberfläche durch entsprechende Formgebung der Preßform für die Heiß-Verpreßung der Mischung aus Kunststoffabfällen und Bindemittel vorzusehen. Bei einen kontinuierlichen Herstellungsvorgang auf einem Förderband ist eine derartige Formgebung nicht möglich, da das als Preßform dienende Förderband stets eben ist.

Ausgehend von der vorstehend geschilderten Platte hat sich die Erfindung zur Aufgabe gestellt, ein Herstellungsverfahren für eine Platte aus Recycling-Kunststoffen mit einer konkaven Oberfläche anzugeben, bei welchem die Verpressung der Mischung aus Recycling-Kunststoffen und Bindemittel auf einem Förderband erfolgt. Bei einer nach diesem Verfahren hergestellten Platte wird angestrebt, die Oberflächeneigenschaften der konkaven Oberfläche verbessern, beispielsweise deren Rutschfestigkeit zu vergrößeren oder deren Aussehen zu verbessern.

Diese Aufgabe wird verfahrenstechnisch durch die kennzeichnenden Merkmale des Patentanspruchs 1 gelöst. Die so hergestellte Platte ist Gegenstand des nebengeordneten Anspruches 7.

Vorteilhafte Weiterbildungen und Ausgestaltungen ergeben sich für das erfindungsgemäße Verfahren aus den Unteransprüchen 2 bis 6 und für die erfindungsgemäße Platte aus den Unteransprüchen 8 bis 11.

Die Erfindung beruht auf der Überlegung, in einem kontinuierlichen Heißkleber-Preßvorgang auf einem Förderband in bekannter Weise einen ebenen Plattenkern herzustellen. Um der fertigen Platte trotz der zunächst ebenen Form des Plattenkerns eine konkave Oberseite zu verleihen, wird die Unterseite des Plattenkerns unmittelbar nach dessen Herstellung mit einem flüssigen Kunstharz beschichtet. In die flüssige Kunstharzbeschichtung werden eine oder mehrere Lagen Vliesstoff eingelegt und anschließend das Kunstharz ausgehärtet. Da sich beim Aushärten das Kunstharz zusammenzieht, werden über den Vliesstoff auf die Unterseite der Platte Zugkräfte aufgebracht, welchen den Plattenkern wölben, da entsprechende Zugkräfte auf der Oberseite der Platte fehlen. Infolge dieser Wölbung erhält die Oberseite der fertigen Platte die gewünschte konkave Form. Wird die Platte als Bodenplatte im Außenbereich verlegt, so bleibt Regen- und Schmelzwasser nicht auf der Plattenoberseite stehen, sondern läuft zu den Rändern der Platte hin ab, von wo es beispielsweise über eine Drainage abgeführt wird. Ein weiterer Vorteil liegt darin, daß durch die Beschichtung mit einem harzgetränktem Vliesstoff die Festigkeit der fertigen Platte deutlich erhöht wird, ohne daß die Plattendicke vergrößert zu werden braucht.

Die Erfindung wird anhand eines Ausführungsbeispiels in den Zeichnungen naher erläutert. Es zeigt:
- Fig. 1: einen Vertikalschnitt durch eine Platte nach der Erfindung, und
- Fig. 2: ein Beispiel für eine Verlegung der Platte gem. Fig. 1 auf einem Balkon.

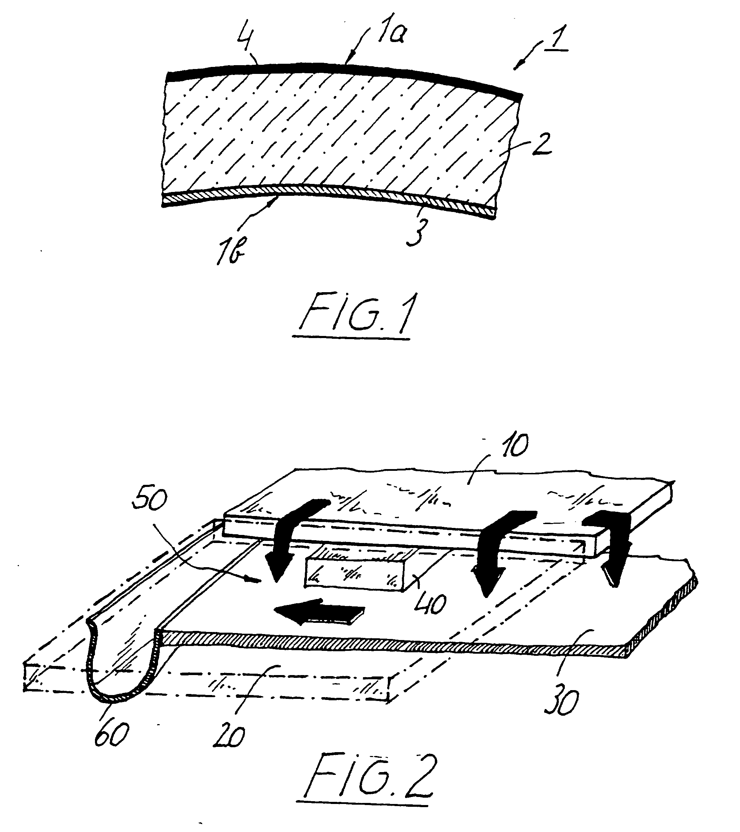

Die in Fig. 1 im Vertikalschnitt gezeigte Platte 1 weist einen Plattenkern 2 aus vorzugsweise Recycling - Kunststoffen auf, der nach einem bekannten Heißkleber-Preßverfahren hergestellt ist. Bei diesem bekannten Herstellungsverfahren wird pulverförmiges Polyurethan aus wiederaufbereitetem, d.h., zermahleuem Polyurethan - Hartschaum mit Isocyanat als Bindemittel und mit Wasser vermischt. Der Polyurethan - Anteil beträgt beispielsweise 80 Gewichts -%, der Isocyanat - Anteil 8 Gewichts - % und der Wasseranteil 2 Gewichts - %. Die restlichen 10 Gewichtsanteile bilden Zuschlagstoffe aus wiederverwerteten Materialien, beispielsweise Vlies - Stoffabfälle zur Verbesserung der Biegeelastizität der Platte und/oder grobkörnige Thermoplast-Kunststoffreste wie Polystyrol aus Kunststoff-Umverpackungen zur Erhöhung der Druckfestigkeit der fertigen Platte. Die genannten Ausgangsstoffe werden über eine Schnecke gemischt und als Schüttgut auf ein Förderband aufgegeben, wo eine Verpressung mit beispielsweise 50 Tonnen/cm² bei 200 Grad Celsius über eine Dauer von 4-10 Minuten erfolgt. Anschließend werden die verpreßten Rohlinge unter Druck über einen Zeitraum von 4-10 Minuten abgekühlt. Diese ebenen Rohling werden anschließend als rohe Plattenkerne 2 weiterverarbeitet.

Um der fertigen Platte 1 trotz der zunächst ebenen Form des Plattenkerns 2 eine konkave Oberseite 1a zu verleihen, wird die Unterseite des Plattenkerns 2 unmittelbar nach dessen Herstellung mit einem flüssigen Kunstharz, z.B. Polyurethanharz, beschichtet, welches mit dem Polyurethan - Anteil des Plattenkerns 2 eine besonders innige Verbindung eingeht. In die flüssige Kunstharzbeschichtung werden eine oder mehrere Lagen Vliesstoff 3, z.B. Polypropylen - Vlies, eingelegt und anschließend das Kunstharz ausgehärtet. Da sich beim Aushärten das Kunstharz zusammenzieht, werden über den Vliesstoff 3 auf die Unterseite 1b der Platte 1 Zugkräfte aufgebracht, welchen den Plattenkern 2 wölben, da entsprechende Zugkräfte auf der Oberseite 1a der Platte 1 fehlen. Infolge dieser Wölbung erhält die Oberseite 1a der fertigen Platte 1 die in Figur angedeutete konkave Form. Nach erfolgtem Aushärten des Kunstharzes wird die Platte 1 maßgenau zugeschnitten.

Die Wirkung der konkav gewölbten Oberseite 1a der Platte 1 ist in Fig. 2 beispielhaft veranschaulicht. In dem gezeigten Beispiel werden Platten 10, 20, welche der Platte 1 in Fig. 1 entsprechen, als Bodenplatten zum Abdecken eines Balkons 30 verwendet. Die Platten 10, 20 werden auf Abstandshaltern 40 gelagert, so daß zwischen den Platten 10, 20 und dem Balkon 30 ein Drainagekanal 50 gebildet ist. Der Drainagekanal 50 entwässert in eine Regenrinne 60, welche längs der Außenkante des Balkons 30 aufgehängt ist. Infolge der konkaven Oberseite 1a der Platten 10, 20 läuft Regen- und Schmelzwasser zu den Außenkanten jeder Platte 10, 20 hin ab, wie durch stark hervorgehobene Pfeile in Fig 2 angedeutet ist.

Ein weiterer Vorteil der Kaschierung der Unterseite des Plattenkerns 2 mit harzgetränktem Vliesstoff 3 besteht darin, daß die Festigkeit der fertigen Platte 1 gegenüber dem rohen Plattenkern 2 deutlich erhöht ist.

Zur Erreichung des weiteren Erfindungsziels einer Verbesserung der Oberflächeneigenschaften der Platte 1 kann der Plattenkern 2 gemäß Fig. 1 an seiner Oberseite mit einer Schicht 4 aus Polyurethanharz beschichtet werden, in welche Quarzsand zur Erhöhung der Rutschfestigkeit oder farbige Chips aus Polyurethan zur ästhetischen Oberflächengestaltung eingestreut werden. Des weiteren können die Schnittkanten der Platte 1 mit Polyurethanharz bestrichen werden, um deren Aussehen zu verbessern.

Die erfindungsgemäße Platte zeichnet sich durch ein geringes Gewicht, hohe Wärme- und Schalldämmung, hohe Schlagfestigkeit und Wasserunempfindlichkeit aus. Die Platte 1 kann ohne Gefahr von Kantenausbrüchen gesägt, gebohrt oder geschliffen werden. Aufgrund dieser Eigenschaften eignet sich die Platte 1 für Balkon- und Terassenbeläge, Fensterbänke, Fassadenverkleidungen, Gartenzäune, Fahrzeugaufbauten, Küchenmöbel, Türen und Tore, also generell für alle Anwendungen von Holz- und Holzspanwerkstoffen, ohne aber deren Nachteile aufzuweisen.

## Patentansprüche

1. Verfahren zum Herstellen einer Platte aus Recycling - Kunststoffen im Heißkleber - Preßverfahren, bei dem ein Plattenkern (2) durch Vermischen von pulverförmigem Polyurethan oder zermahlenem Polyurethan-Hartschaum mit Isocyanat, Wasser und gegebenenfalls Zuschlagstoffen und durch Verpressen dieser Mischung unter Druck und Temperatur auf einem Förderband hergestellt wird, **dadurch gekennzeichnet, daß** die Unterseite des fertig hergestellten Plattenkerns (2) mit flüssigem Kunstharz beschichtet wird, daß in das flüssige Kunstharz eine oder mehrere Lagen Gewebe (3) in Form eines Fadengeleges eingelegt werden, derart, daß sich die Oberseite des Plattenkerns (2) beim Aushärten des Kunstharzes konkav wölbt.

2. Verfahren nach Anspruch 1, **dadurch gekennzeichnet, daß** die Oberseite des Plattenkerns (2) mit einer Schicht (4) aus Kunstharz versehen wird, in welche körniges oder pulverförmiges Material eingestreut wird.

3. Verfahren nach Anspruch 2, **dadurch gekennzeichnet, daß** als körniges Material Quarzsand oder Acrylsand vorgesehen wird.

4. Verfahren nach Anspruch 2, **dadurch gekennzeichnet, daß** als pulverförmiges Material Kunststoffmehl vorgesehen wird.

5. Verfahren nach Anspruch 1, **dadurch gekennzeichnet, daß** die Oberseite des Plattenkerns (2) mit einer Schicht (4) aus Kunstharz versehen wird, in welche farbige Chips aus Knaststoffen eingestreut werden.

6. Verfahren nach einem der Ansprüche 1 bis 5, **dadurch gekennzeichnet, daß** die Platte (1) maßgenau zugeschnitten wird und daß die Schnittkanten mit Kunstharz bestrichen wenden.

7. Platte aus Recycling-Kunststoffen, deren Plattenkern (2) im Heiß-Klebe-Preßverfahren hergestellt ist, **dadurch gekennzeichnet, daß** der Plattenkern (1) nur an seiner Unterseite (1b) mit einer nachträglich aufgebrachten Schicht aus ausgehärtetem Kunstharz und einer oder mehreren Lagen Gewebe (3) in Form eines Fadengeleges versehen ist, wobei die Oberseite (1a) des Plattenkerns (2) durch die nachträglich aufgebrachte Schicht auf der Unterseite konkav gewölbt ist, und daß die Oberseite (1a) des Plattenkerns (2) mit einer Schicht (4) aus Kunstharz versehen ist, in welche körniges oder pulverförmiges Material eingestreut ist.

8. Platte nach Anspruch 7, **dadurch gekennzeichnet, daß** als körniges Material Quarzsand oder Acrylsand vorgesehen ist.

9. Platte nach Anspruch 7, **dadurch gekennzeichnet, daß** als pulverförmiges Material Kunststoffmehl vorgesehen ist.

10. Platte aus Recycling-Kunststoffen, deren Plattenkern (2) im Heiß-Klebe-Preßverfahren hergestellt ist, **dadurch gekennzeichnet, daß** der Plattenkern (1) nur an seiner Unterseite (1b) mit einer nachträglich aufgebrachten Schicht aus ausgehärtetem Kunstharz und einer oder mehreren Lagen Gewebe (3) in Form eines Fadengeleges versehen ist, wobei die Oberseite (1a) des Plattenkerns (2) durch die nachträglich aufgebrachte Schicht auf der Unterseite konkav gewölbt ist, und daß die Oberseite (1a) des Plattenkerns (2) mit einer Schicht (4) aus Kunstharz versehen ist, in welche farbige Chips aus Kunststoffen eingestreut sind.

11. Platte nach einem der Ansprüche 7 bis 10, **dadurch gekennzeichnet, daß** die Platte (1) maßgenau zugeschnitten ist und daß die Schnittkanten mit Kunstharz bestrichen sind.

## Claims

1. Method of producing a slab from recycled plastics materials by the hot-adhesive compression process, in which a slab-core (2) is produced by mixing powdered polyurethane or pulverized rigid polyurethane foam with isocyanate, water and, if required, additives and by compressing this mixture under pressure and at temperature on a conveyor belt, **characterised in that** the underside of the finished slab-core (2) produced is coated with liquid synthetic resin, and **in that** one or more layers of fabric (3) in the form of a non-woven material are inserted in the liquid synthetic resin, in such a way that the upper side of the slab-core curves into a concave shape when the synthetic resin cures.

2. Method according to claim 1, **characterised in that** the upper side of the slab-core (2) is provided with a layer (4) of synthetic resin into which granular or powdered material is scattered.

3. Method according to claim 2, **characterised in that** quartz sand or acrylic sand is provided as a granular material.

4. Method according to claim 2, **characterised in that** milled-up plastics material is provided as a powdered material.

5. Method according to claim 1, **characterised in that** the upper side of the slab-core (2) is provided with a layer (4) of synthetic resin into which coloured chips of plastics materials are scattered.

6. Method according to one of claims 1 to 5, **characterised in that** the slab (1) is trimmed exactly to size and the cut edges are coated with synthetic resin.

7. Slab made from recycled plastics materials, of which the core (2) is produced by the hot-adhesive compression process, **characterised in that** the slab-core (2) is provided only on its underside (1b) with a subsequently applied layer of cured synthetic resin and one or more layers of fabric (3) in the form of a non-woven material, the upper side (1a) of the slab-core (2) being curved into a concave shape by the subsequently applied layer on the underside, and **in that** the upper side (1a) of the slab-core (2) is provided with a layer (4) of synthetic resin into which granular or powdered material is scattered.

8. Slab according to claim 7, **characterised in that** quartz sand or acrylic sand is provided as a granular material.

9. Slab according to claim 7, **characterised in that** milled-up plastics material is provided as a powdered material.

10. Slab made from recycled plastics materials, of which the core (2) is produced by the hot-adhesive compression process, **characterised in that** the slab-core (2) is provided only on its underside (1b) with a subsequently applied layer of cured synthetic resin and one or more layers of fabric (3) in the form of a non-woven material, the upper side (1a) of the slab-core (2) being curved into a concave shape by the subsequently applied layer on the underside, and **in that** the upper side (1a) of the slab-core (2) is provided with a layer (4) of synthetic resin into which coloured chips of plastics materials are scattered.

11. Slab according to one of claims 7 to 10, **characterised in that** the slab (1) is trimmed exactly to size and the cut edges are coated with synthetic resin.

## Revendications

1. Procédé de préparation d'une plaque constituée de matières plastiques de recyclage dans un procédé de pressage thermoadhésif, dans lequel un coeur de plaque (2) est préparé par mélange de polyuréthanne pulvérulent ou de mousse rigide de polyuréthanne broyée avec un isocyanate, de l'eau et le cas échéant, des aggrégats et par pressage de ce mélange sous pression et température sur une bande transporteuse, **caractérisé en ce que** la face inférieure du coeur de plaque (2) préparé est revêtue d'une résine liquide, **en ce que** l'on dispose dans la résine liquide, une ou plusieurs couches de tissu (3) sous forme d'un lit de fibres, de sorte que la face supérieure du coeur de plaque (2) se voûte de manière concave lors du durcissement de la résine.

2. Procédé selon la revendication 1, **caractérisé en ce que** la face supérieure du coeur de plaque (2) est munie d'une couche (4) en résine, dans laquelle est distribué un matériau granuleux ou pulvérulent.

3. Procédé selon la revendication 2, **caractérisé en ce que** l'on prévoit du sableux siliceux ou du sable acrylique comme matériau granuleux.

4. Procédé selon la revendication 2, **caractérisé en ce que** l'on prévoit de la matière plastique comme matériau pulvérulent.

5. Procédé selon la revendication 1, **caractérisé en ce que** la face supérieure du coeur de plaque (2) est munie d'une couche (4) de résine, dans laquelle sont distribuées des paillettes colorées en matière plastique.

6. Procédé selon l'une des revendications 1 à 5, **caractérisé en ce que** la plaque (1) est coupée à dimension et **en ce que** les bords de coupe sont enduits de résine.

7. Plaque constituée de matières plastiques de recyclage, dont le coeur de plaque (2) est préparé dans un procédé de pressage thermoadhésif, **caractérisée en ce que** le coeur de plaque (1) n'est muni que sur sa face inférieure (1b) d'une couche appliquée ultérieurement en résine durcie et une ou plusieurs couches de tissu (3) sous forme d'un lit de fibre, où la face supérieure (1a) du coeur de plaque (2) est voûtée de manière concave par la couche appliquée ultérieurement sur la face inférieure et **en ce que** la face supérieure (1a) du coeur de plaque (2) est munie d'une couche (4) de résine, dans laquelle est distribué un matériau granuleux ou pulvérulent.

8. Plaque selon la revendication 7, **caractérisée en ce que** l'on prévoit du sableux siliceux ou du sable acrylique comme matériau granuleux.

9. Plaque selon la revendication 7, **caractérisée en ce que** l'on prévoit de la matière plastique comme matériau pulvérulent.

10. Plaque constituée de matières plastiques de recyclage, dont le coeur de plaque (2) est préparé dans un procédé de pressage thermoadhésif, **caractérisée en ce que** le coeur de plaque (1) n'est muni que sur sa face inférieure (1b) d'une couche appliquée ultérieurement en résine durcie et une ou plusieurs couches de tissu (3) sous forme d'un lit de fibre, où la face supérieure (1a) du coeur de plaque (2) est voûtée de manière concave par la couche appliquée ultérieurement sur la face inférieure et **en ce que** la face supérieure (1a) du coeur de plaque (2) est munie d'une couche (4) de résine, dans laquelle sont distribuées des paillettes colorées en matière plastique.

11. Plaque selon l'une des revendications 7 à 10, **caractérisée en ce que** la plaque (1) est coupée à dimension et **en ce que** les bords de coupe sont enduits de résine.
